# EUROPEAN PATENT SPECIFICATION

(11) **EP 4 101 784 B1**
(45) Date of publication and mention of the grant of the patent: **05.11.2025**
(21) Application number: 22177535.6
(22) Date of filing: 07.06.2022
(51) Int. Cl.: B65D 77/20, A47J 36/02

(54) **LID MADE OF METAL FOIL, PARTICULARLY FOR CONTAINERS OR TRAYS FOR FOOD USE**
DECKEL AUS METALLFOLIE, INSBESONDERE FÜR BEHÄLTER ODER SCHALEN ZUR VERWENDUNG MIT LEBENSMITTELN
COUVERCLE EN FEUILLE MÉTALLIQUE, EN PARTICULIER POUR DES RÉCIPIENTS OU DES PLATEAUX DESTINÉS À L'ALIMENTATION

(30) Priority: 10.06.2021 IT 202100015122
(43) Date of publication of application: 14.12.2022
(73) Proprietor: Cuki Cofresco S.r.l., 10088 Volpiano TO (IT)
(72) Inventor: DI SCANNO, Fabio, 03020 GIULIANO DI ROMA FR (IT); GIOVANNELLI, Fabrizio, 03020 VILLA S. STEFANO FR (IT); PESSANA, Alessandro, 10145 TORINO (IT)
(74) Representative: Modiano, Micaela Nadia

(56) References cited:
- GB-A- 1 253 913
- US-A1- 2018 086 502
- US-A1- 2018 086 513

## Description

The present invention relates to a lid made of metal foil, particularly for containers or trays for food use.

In the field of gastronomy and catering, particularly for takeaway food, in the confectionery sector and the like, containers or trays made of metal foil, typically aluminum, are frequently used which can be closed with a lid, typically made of cardboard laminated with a synthetic material or made of plastic.

In most cases, the lid is applied and locked manually on the container, and said containers have, in the upper part, a rim (commonly called L-shaped rim or lip) that is rotated or folded inwards over the lid in order to secure it to the container and prevent the escape of the contents.

The rim must therefore be designed in such a way to guarantee good closing efficiency and also to prevent the operators who package the containers when they are sold filled with food, or the users who open them to extract the contents from them, from cutting themselves.

In fact, the risk of cutting oneself is high, since the foil of which the containers are made is very thin (typically, a few tens of microns in thickness).

Currently, this aim is achieved mainly with two types of shaping of the L-shaped rim: - curl-finished L-shaped rim; - fold-finished L-shaped rim.

The first solution, generally adopted in rectangular or square containers, creates a rounded (tubular) fold of the aluminum along the rectilinear parts of the sides, thus eliminating their cutting effect. Such a solution is featured in US 2018/086502 A1, which comprises a lid and container combination according to the preamble of claim 1.

Curl-finishing is instead not provided at the corners, which are usually rounded, because it would make folding onto the lid difficult.

The reduction of the blade effect in the corners is entrusted exclusively to a natural corrugation of the containers in these areas, which is the result of a gathering of the material during stamping and locally increases the thickness of the aluminum.

The second solution is generally adopted in circular containers and provides for a simple folding of the rim onto itself, which is easily achievable also in curvilinear parts.

Experience has shown that, in the case of containers with a curled rim, despite the increase in thickness due to corrugation the unfinished rim in the curvilinear corner parts still remains quite sharp.

Moreover, the lid closing operation is easy and fast in the rectilinear parts but it is certainly less easy in the curved corner regions, which offer a relatively high resistance to rotation or folding for closure.

Again, this solution makes production more complex and expensive, since it requires a different treatment of different regions of the rims.

Even in the case of circular containers, the folded rim leaves a non-negligible possibility of cutting oneself, especially for who closes the containers.

In fact, once the rim has been turned inward and made to adhere to the lid at an initial point, when one proceeds to uniform the closure with one's fingers it is relatively easy to cut oneself with the folded part if one does not work with a certain care.

The need to operate with a certain care, however, slows down the closing operations.

In addition, there is still a relatively high resistance to rotation or folding for closure.

Moreover, in known systems the tray is scarcely suitable for use on a table without the lid, since the diners, too, can easily injure themselves with the sharp parts of the rim.

Also from the manufacturer's point of view, the fact of having to finish square/rectangular containers in a different manner with respect to circular ones makes the production process more complicated and onerous.

Another drawback of known systems is that lids made of laminated cardboard, and even more so lids made of plastic, have a non-negligible environmental impact due to the limited possibilities of material recovery and recycling.

In addition, both lids made of laminated cardboard and lids made of plastic have a performance that is not entirely satisfactory in terms of protection of food from degradation and in terms of storage times.

Moreover, the manufacturing process of laminated cardboard lids is relatively complex and expensive, since it is necessary to manage two materials of very different nature and their lamination.

Laminated cardboard lids have the additional disadvantage that the cardboard tends to become impregnated with the moist component of the food, and therefore the user can easily get dirty during handling. In addition, the laminated cardboard lids are not washable and therefore cannot be reused in safe hygienic conditions.

Another drawback of laminated cardboard lids is that the extraction of the lid from the tray, after the L-shaped rim thereof has been lifted, is awkward. In fact, in order to facilitate the seal, the rim of the lid is flush with the L-shaped rim of the tray and is therefore difficult to grip with one's fingers.

Lids made of plastic, moreover, have problems during unstacking, since the surfaces of adjacent lids tend to stick together, making separation difficult.

The aim of the invention is to provide a lid made of metal foil, particularly for a food container, which obviates the drawbacks of the background art.

Within this aim, an object of the invention is to provide a lid made of metal foil which can be closed manually on a container, engaging with the rim thereof in a simple and easy manner, without injuring the fingers of the user due to sharp edges or the like.

Another object of the invention is to provide a lid made of metal foil that is capable of giving the greatest assurances of reliability, tightness, safety and cleanliness in use.

Yet another object of the invention is to provide a lid made of metal foil which has a very low or even zero environmental impact, since it can be recycled 100%.

A further object of the invention is to provide a lid made of metal foil which has a high performance in terms of protecting food from degradation and in terms of storage times.

Yet another object of the invention is to provide a lid made of metal foil which facilitates the unstacking operations.

Another object of the invention is to provide a lid made of metal foil which can be reused in safe hygienic conditions.

Not least object of the invention is to provide a lid made of metal foil that can be provided by means of per se known technologies and therefore has low provision costs.

This aim and these and other objects which will become better apparent hereinafter are achieved by a combination of a container and lid as defined in claim 1.

Further characteristics and advantages of the invention will become better apparent from the description of a preferred but not exclusive embodiment of a lid made of metal foil, particularly for containers or trays for food use, illustrated by way of non-limiting example with the aid of the accompanying drawings, wherein:
Figure 1 is a perspective view of the lid made of metal foil according to the invention;

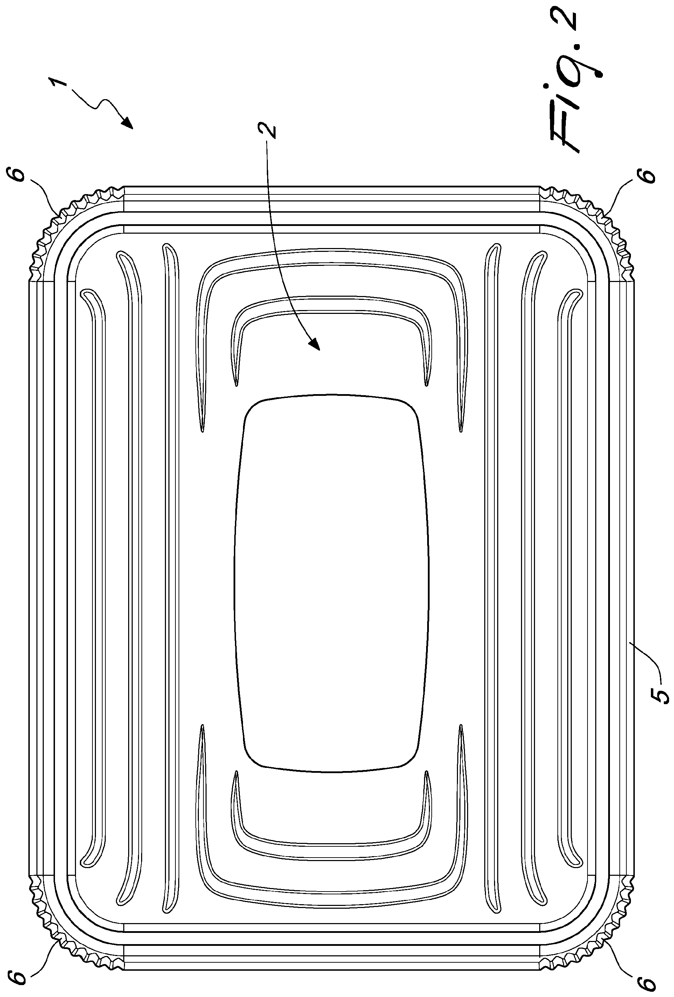

Figure 2 is a top plan view of the lid shown in Figure 1;
Figure 3 is a lateral elevation view of the lid shown in the preceding figures and applied to a container;
Figure 4 is a partially sectional enlarged-scale view of a detail of the lid shown in Figure 3 in a different operating configuration;
Figure 5 is a view similar to Figure 1, which shows an alternative embodiment of the invention.

With particular reference to the figures, a lid made of metal foil, particularly for containers or trays for food use, generally designated by the reference numeral 1, comprises a main body 2 with a substantially flat shape, having a peripheral extension with curvilinear portions. The main body 2 is intended to rest on the upper rim 3 of a container or tray 4 for food use so as to close it.

In greater detail, the main body 2 has a protruding edge 5 which can be folded manually below the upper rim 3 of the container or tray 4 in order to seal the latter.

Advantageously, said protruding edge 5 extends along the entire peripheral extension of the main body 2, but it might also be interrupted in some points.

According to the invention, the protruding edge 5 has, at at least along one part of the curvilinear portions of the peripheral extension of the main body 2, a transverse set of creases 6, more commonly known as pleating.

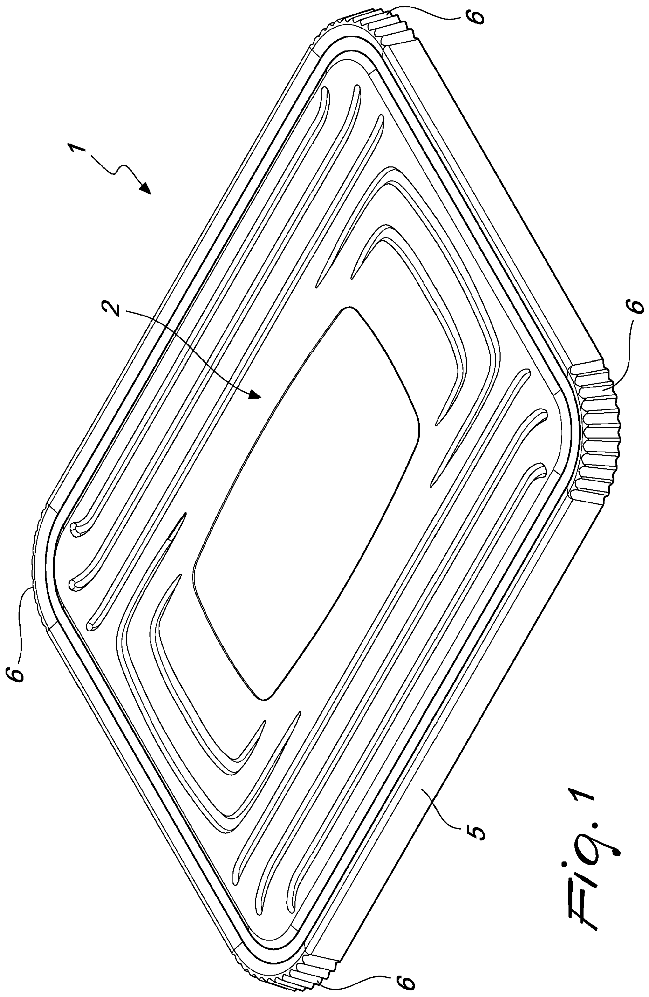

In the embodiment shown in Figures 1, the main body 2 has a substantially flat geometric shape with a polygonal plan profile and more specifically with a rectangular plan profile with rounded corners.

Consequently, as will become better apparent hereinafter, in order to allow the correct sealing of the container or tray 4 with the lid 1, advantageously only the portions of the protruding edge 5 that correspond to the rounded corners have the pleating 6, while the remaining portions are substantially without pleats.

Generally, in the present description and in the claims, the term "at least one part" referred to the curvilinear portions indicates both the case in which the perimetric extension has curvilinear portions and non-curvilinear portions, and the pleating extends on the protruding edge at one or more of the curvilinear portions, and the case in which the perimetric extension is totally curvilinear (for example, circular, oval, etcetera) and the pleating extends over all of, or only on a portion of, the protruding edge.

In any event, although the main body 2 shown in the cited figures has a polygonal shape, in one variation, not shown, of the lid 1 the pleating 6 can extend along all of the perimetric extension of the main body 2.

In the embodiment described here, the lid 1 is made of aluminum alloy and the folds of the pleating 6 have a depth comprised between a few tenths of a millimeter and a few millimeters, preferably between 0.2 and 6 millimeters, with a width comprised between a few tenths of a millimeter and a few millimeters, preferably between 0.2 and 6 millimeters.

It is not excluded, however, that in a variation, not shown, of the lid 1, the folds of the pleating 6 may have a cross-section of variable dimensions along their transverse extension.

The operation of the lid 1 is clear and evident from what has just been described.

In particular, it should be highlighted that the pleating 6 acts substantially as a "guide" for the rotation of the protruding edge 5, so that minimum resistance is obtained.

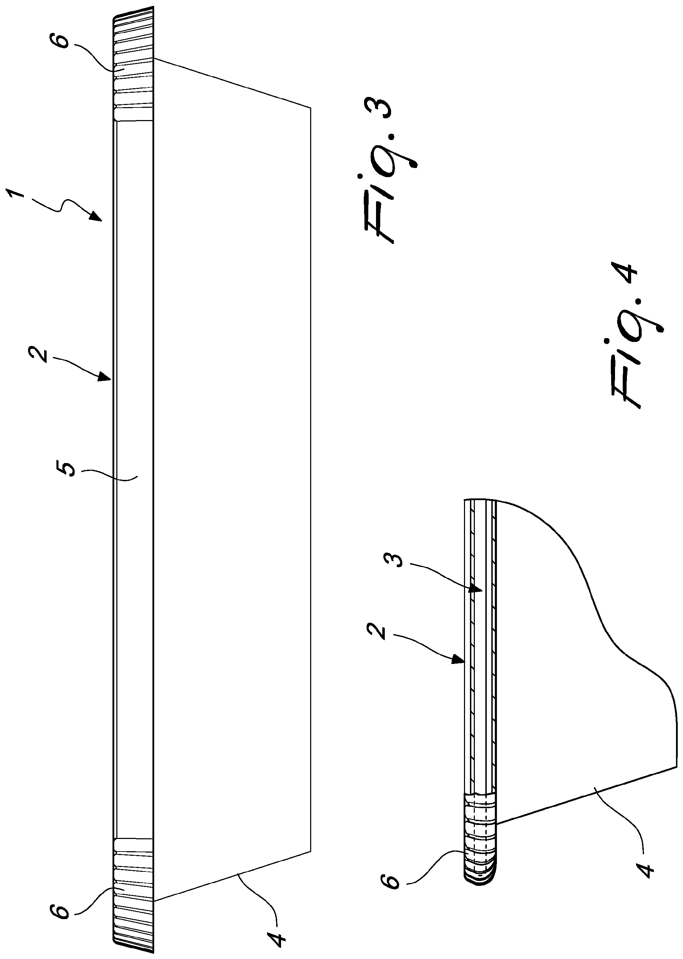

With particular reference to Figures 3 and 4, for the closure of the container or tray 4 and for the locking of the lid 1 the protruding edge 5 is folded below the upper rim 3 of the container or tray 4.

During such operation the operator does not get cut with the edge of the rim.

In fact, the creases of the pleating 6 interrupt the linearity/continuity of the sharp edge of the aluminum, and eliminate the possibility of cutting also for the user, when he will have to lift the rim in order to be able to open the container.

In practice it has been found that the lid made of metal foil, particularly for containers or trays for food use, achieves the intended aim and objects of the invention, since it allows to overcome all the drawbacks of the background art described previously.

In fact, as already mentioned, in addition to eliminating the sharp edge of the aluminum by increasing the overall thickness of the rim, the pleating reduces the resistance of the L-shaped rim to folding, making closure easier and more effective.

Furthermore, in the case of rectangular or square containers, a different processing of the rectilinear sides with respect to the corner regions that connect them is no longer necessary.

Moreover, there is no different processing of the rims for circular containers and rectangular or square containers.

Furthermore, the tray may be provided with its rim completely finished without sharp parts, so as to be suitable for the use at the table without the lid.

Moreover, as is well-known to the person skilled in the art, the lid made of aluminum can be made of at least partially recycled material and can be in turn recycled 100%, with consequent energy savings for production from raw material. Therefore, the invention is extremely advantageous also in terms of environmental impact.

Furthermore, aluminum is a material with high performance in terms of protecting food from degradation and in terms of storage times, with a barrier effect against light and oxygen and consequent reduction of food waste.

Furthermore, the lid according to the invention can be provided easily and at low cost by virtue of known molding techniques already used for the production of containers or trays.

Furthermore, it has been found that the pleating facilitates the unstacking of the lids.

Pleating also has the advantage of simplifying the re-use of the lid since the protruding edge, during opening/closure, folds in a regular and repeatable manner, so as to maintain its functionality even after various uses.

The relatively high height of the protruding edge allows to adapt the lid to rims of different widths while maintaining optimum performance in terms of sealing.

Furthermore, the malleability of aluminum allows to adapt said lid to trays and containers of slightly different sizes, while maintaining a high level of functionality, so as to contain production costs significantly.

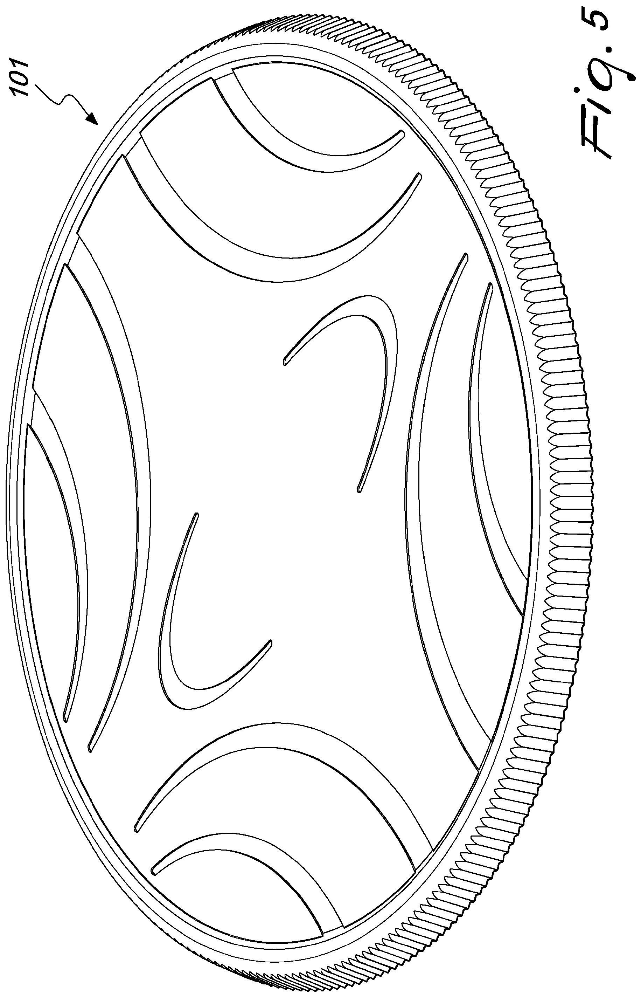

In a variation of the lid 101 shown in Figure 5, the main body has a substantially flat geometric shape with a circular plan. In this case, the pleating extends preferably along the entire protruding edge or, as an alternative, at least on some sectors of the protruding edge interleaved with sectors that are substantially without creases.

The lid made of metal foil described herein, particularly for containers or trays for food use, is susceptible of numerous modifications and variations within the scope of the accompanying claims.

In particular, the protruding edge 5 can have openings, tabs and other per se known similar elements, for example in order to simplify opening.

Furthermore, the protruding edge may have different heights in the regions without pleating than in the pleated regions, also in relation to the different functionalities of said regions.

All the details may furthermore be replaced with other technically equivalent elements.

In practice, the materials used, so long as they are compatible with the specific use, as well as the contingent shapes and dimensions, may be any according to the requirements.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A combination of a container for food use provided with an upper rim (3) projecting outwards from the container walls and a lid (1) made of metal foil and comprising a main body (2) having a substantially flat shape, which is intended to rest on said upper rim (3) so as to close said container (4); said lid (1) being provided with a protruding edge (5); said main body (2) having a peripheral extension with curvilinear portions; **characterized in that** said protruding edge (5) has, at at least one part of said curvilinear portions, a transverse pleating (6) by virtue of which it is adapted to be folded manually upwards under said upper rim (3) in order to seal said container (4).

2. The combination according to claim 1, **characterized in that** said transverse pleating (6) extends along the entire peripheral extension of said main body (2).

3. The combination according to claim 1 or 2, **characterized in that** it is made of aluminum alloy.

4. The combination according to one or more of the preceding claims, **characterized in that** the pleats of said transverse pleating (6) have a depth comprised between a few tenths of a millimeter and a few millimeters.

5. The combination according to claim 4, **characterized in that** the pleats of said transverse pleating (6) have a depth comprised between 0.2 and 6 millimeters.

6. The combination according to one or more of the preceding claims, **characterized in that** said pleats of said transverse pleating (6) have a width comprised between a few tenths of a millimeter and a few millimeters.

7. The combination according to claim 6, **characterized in that** said pleats of said transverse pleating (6) have a width comprised between 0.2 and 6 millimeters.

8. The combination according to one or more of the preceding claims, **characterized in that** said pleats of said transverse pleating (6) have a cross-section with dimensions that change along their transverse extension.

9. The combination according to one or more of the preceding claims, **characterized in that** said main body (2) has a substantially flat geometric shape with a polygonal plan profile with rounded corners, and said transverse pleating is extended along the portions of the protruding edge (5) which correspond to said rounded corners.

10. The combination according to one or more of claims 1 to 9, **characterized in that** said main body has a substantially flat geometric shape with a circular plan profile, and said transverse pleating is extended along a few sectors of said protruding edge with interposition of sectors which are substantially free from pleats.

## Patentansprüche

1. Eine Kombination aus einem Behälter zur Verwendung mit Lebensmitteln, ausgestattet mit einem oberen Rand (3), der von den Wänden des Behälters nach außen ragt, und einem Deckel (1) aus Metallfolie, einen Hauptkörper (2) mit im Wesentlichen flacher Form umfassend, der dazu bestimmt ist, auf dem oberen Rand (3) aufzuliegen, um den Behälter (4) zu verschließen; wobei der Deckel (1) mit einer vorstehenden Kante (5) versehen ist; wobei der Hauptkörper (2) eine periphere Ausdehnung mit krummlinigen Abschnitten hat; **dadurch gekennzeichnet, dass** die vorstehende Kante (5) an mindestens einem Teil der krummlinigen Abschnitte eine transversale Faltung (6) hat, mit deren Hilfe sie ausgebildet ist, manuell nach oben unter den oberen Rand (3) geknickt zu werden, um den Behälter (4) abzudichten.

2. Die Kombination gemäß Anspruch 1, **dadurch gekennzeichnet, dass** die transversale Faltung (6) sich über die gesamte periphere Ausdehnung des Hauptkörpers (2) erstreckt.

3. Die Kombination gemäß Anspruch 1 oder 2, **dadurch gekennzeichnet, dass** sie aus Aluminiumlegierung hergestellt ist.

4. Die Kombination gemäß einem oder mehreren der obigen Ansprüche, **dadurch gekennzeichnet, dass** die Falten der transversalen Faltung (6) eine Tiefe zwischen wenigen Zehnteln eines Millimeters und wenigen Millimetern haben.

5. Die Kombination gemäß Anspruch 4, **dadurch gekennzeichnet, dass** die Falten der transversalen Faltung (6) eine Tiefe zwischen 0,2 und 6 Millimetern haben.

6. Die Kombination gemäß einem oder mehreren der obigen Ansprüche, **dadurch gekennzeichnet, dass** die Falten der transversalen Faltung (6) eine Breite zwischen wenigen Zehnteln eines Millimeters und wenigen Millimetern haben.

7. Die Kombination gemäß Anspruch 6, **dadurch gekennzeichnet, dass** die Falten der transversalen Faltung (6) eine Breite zwischen 0,2 und 6 Millimetern haben.

8. Die Kombination gemäß einem oder mehreren der obigen Ansprüche, **dadurch gekennzeichnet, dass** die Falten der transversalen Faltung (6) einen Querschnitt mit Abmessungen haben, die sich über die transversale Ausdehnung ändern.

9. Die Kombination gemäß einem oder mehreren der obigen Ansprüche, **dadurch gekennzeichnet, dass** der Hauptkörper (2) eine im Wesentlichen flache geometrische Form mit einem vieleckigen Planprofil mit gerundeten Ecken hat und die transversale Faltung entlang den Abschnitten der vorstehenden Kante (5) erweitert ist, die den gerundeten Ecken entsprechen.

10. Die Kombination gemäß einem oder mehreren der Ansprüche 1 bis 9, **dadurch gekennzeichnet, dass** der Hauptkörper eine im Wesentlichen flache geometrische Form mit kreisförmigem Planprofil hat und die transversale Faltung entlang wenigen Sektoren der vorstehenden Kante erweitert ist, mit Anordnung von Sektoren, die im Wesentlichen frei von Falten sind, dazwischen.

## Revendications

1. Combinaison d'un récipient à usage alimentaire pourvu d'un rebord supérieur (3) faisant saillie vers l'extérieur par rapport aux parois du récipient et d'un couvercle (1) constitué d'une feuille métallique et comprenant un corps principal (2) de forme sensiblement plate, qui est destiné à reposer sur ledit rebord supérieur (3) de manière à fermer ledit récipient (4) ; ledit couvercle (1) étant pourvu d'un bord saillant (5) ; ledit corps principal (2) ayant une extension périphérique avec des parties curvilignes ; **caractérisé en ce que** ledit bord saillant (5) a, au moins sur une partie desdites parties curvilignes, un plissage transversal (6) grâce auquel il est adapté pour être plié manuellement vers le haut sous ledit rebord supérieur (3) afin de sceller ledit récipient (4).

2. La combinaison selon la revendication 1, **caractérisée en ce que** ledit plissage transversal (6) s'étend sur toute l'extension périphérique dudit corps principal (2).

3. La combinaison selon la revendication 1 ou 2, **caractérisée en ce qu'**elle est faite d'un alliage d'aluminium.

4. La combinaison selon une ou plusieurs des revendications précédentes, **caractérisée en ce que** les plis dudit plissage transversal (6) ont une profondeur comprise entre quelques dixièmes de millimètre et quelques millimètres.

5. La combinaison selon la revendication 4, **caractérisée en ce que** les plis dudit plissage transversal (6) ont une profondeur comprise entre 0,2 et 6 millimètres.

6. La combinaison selon une ou plusieurs des revendications précédentes, **caractérisée en ce que** lesdits plis dudit plissage transversal (6) ont une largeur comprise entre quelques dixièmes de millimètre et quelques millimètres.

7. La combinaison selon la revendication 6, **caractérisée en ce que** lesdits plis dudit plissage transversal (6) ont une largeur comprise entre 0,2 et 6 millimètres.

8. La combinaison selon une ou plusieurs des revendications précédentes, **caractérisée en ce que** lesdits plis dudit plissage transversal (6) ont une section transversale dont les dimensions changent le long de leur extension transversale.

9. La combinaison selon une ou plusieurs des revendications précédentes, **caractérisée en ce que** ledit corps principal (2) a une forme géométrique sensiblement plate avec un profil en plan polygonal avec des coins arrondis, et ledit plissage transversal est étendu le long des parties du bord saillant (5) qui correspondent auxdits coins arrondis.

10. La combinaison selon une ou plusieurs des revendications 1 à 9, **caractérisée en ce que** ledit corps principal a une forme géométrique sensiblement plate avec un profil en plan circulaire, et ledit plissage transversal s'étend le long de quelques secteurs dudit bord saillant avec interposition de secteurs qui sont sensiblement exempts de plis.
